# EUROPÄISCHE PATENTSCHRIFT

(11) **EP 4 194 262 B1**
(45) Veröffentlichungstag und Bekanntmachung des Hinweises auf die Patenterteilung: **12.03.2025**
(21) Anmeldenummer: 22212735.9
(22) Anmeldetag: 12.12.2022
(51) Int. Cl.: B60N 2/015, B60N 2/06, B60N 2/00

(54) **FREIZEITFAHRZEUG MIT EINER VERSTELLBAREN SITZEINRICHTUNG**
RECREATIONAL VEHICLE WITH ADJUSTABLE SEAT ASSEMBLY
VÉHICULE DE LOISIR AVEC UN SIÈGE RÉGLABLE

(30) Priorität: 11.12.2021 DE 102021132771
(43) Veröffentlichungstag der Anmeldung: 14.06.2023
(73) Patentinhaber: Erwin Hymer Group SE, 88339 Bad Waldsee (DE)
(72) Erfinder: Buck, Rainer, 88239 Wangen (DE); Metzler, Marcus, 88339 Bad Waldsee (DE); Dorn, Günter, 88281 Schlier (DE)
(74) Vertreter: Müller Schupfner & Partner Patent- und Rechtsanwaltspartnerschaft mbB (Muc)

(56) Entgegenhaltungen:
- EP-A1- 3 764 844
- EP-B1- 3 764 844
- DE-U1- 202013 005 988
- US-A1- 2020 298 900

## Beschreibung

Die Erfindung betrifft ein Freizeitfahrzeug, das insbesondere als Wohnmobil ausgebildet ist.

Aus der DE 94 13 168 U1 ist ein Wohnmobil bekannt. Das bekannte Wohnmobil weist eine dreisitzige, im Wohnbereich angeordnete, zu einer Liege umbaubare und/oder verschiebbare, mit Sicherheitsgurten ausgerüstete Sitzbank und hinter der Rückenlehne der Sitzbank angeordnete Küchenschränke oder ähnliches auf. Bei der dreisitzigen Sitzbank ist für alle Sitze ein Dreipunktgurt vorgesehen.

Das aus der DE 94 13 168 U1 bekannte Wohnmobil hat den Nachteil, dass keine speziellen Sicherheitsvorkehrungen für einen Seitenaufprall vorgesehen sind.

Bei einem herkömmlichen Freizeitfahrzeug (Reisemobil) sitzen die Passagiere in der Regel auf fest installierten Sitzen in Fahrrichtung direkt an der Seitenwand. Als Rückhaltesystem für Frontalunfälle ist ein Dreipunktgurt installiert. Für den seitlichen Unfall sind keine Sicherheitsvorkehrungen vorhanden. Die Aufbaukonstruktion sowohl des Fahrzeugbodens als auch der Seitenwand können im Fall eines Aufpralls keine ausreichende Energieaufnahme gewährleisten, ohne dass sich der Fahrgastraum im Umfeld der Passagiere derart verformt, dass die notwendige Sicherheitszone nicht davon betroffen ist. Nur der Bereich von Fahrer- und Beifahrer wird im Original-Fahrzeug, das vom Fahrzeughersteller, also dem Hersteller des Chassis, hergestellt wird, entsprechend abgesichert. Dies gilt jedenfalls für Campervans und teilintegrierte Ein gattungsgemässes Freizeitfahrzeug ist aus der US2020/298900 bekannt.

Der vorliegenden Erfindung liegt die Aufgabe zugrunde, ein Freizeitfahrzeug, das insbesondere als Wohnmobil oder Campervan ausgebildet ist, anzugeben, das in verbesserter Weise ausgeführt ist und bei dem insbesondere eine höhere Sicherheit für Passagiere gewährleistet ist.

Diese Aufgabe wird durch eine Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß durch ein Freizeitfahrzeug, insbesondere Wohnmobil oder Campervan, gemäss Anspruch 1 gelösst.

Eine oder mehrere Sitzeinrichtungen können als Einzelsitze (Passagiersitze) ausgebildet sein.

Die Passagiersitze können in unterschiedlichen Positionen im Fahrzeug fixiert werden. Für den Wohngebrauch z.B. nahe der Seitenwand, um größtmögliche Abstände zu anderen Bauteile zu erhalten und den angrenzenden Bewegungsraum zu maximieren. Auch ergonomische Gründe können für die Definition der Platzierung entsprechend der an dieser Stelle stattfindenden Tätigkeiten berücksichtigt werden.

Bevor sich das Fahrzeug starten lässt, müssen die Positionen, in dem Fall, dass sich dort weitere Passagiere befinden, vorzugsweise verändert werden. Sowohl die Belegung eines Sitzes als auch dessen Position werden vorzugsweise über geeignete Sensoren abgefragt bzw. überprüft.

Die Fahrtpositionen der Sitze werden nun vorzugsweise so gewählt, dass sich im Fall eines Unfalls, insbesondere bei einem seitlichen Aufprall, die Passagiere trotz der entstehenden Verformung des Fahrgastraumes in der für Sie vorgeschriebenen Sicherheitszone befinden und somit eine Verletzung ausgeschlossen werden kann. Um die Verformung des Fahrgastraumes so gering wie möglich zu halten, wird der Bereich zwischen der Außenkante des Fußbodens bzw. der Seitenwand und einem tragenden Element des Fahrzeugchassis, insbesondere einem Längsträger aus Stahlprofilen, vorzugsweise mit einem stark Energie absorbierenden Element ausgestattet. Durch dieses Element kann der harte Aufschlag gedämpft werden und die resultierenden Kräfte auf die Passagiere werden verringert.

Der freiwerdende Raum zwischen Seitenwand und dem Mitfahrer kann noch zusätzlich durch einen Airbag ausgestattet werden, um so die Sicherheit bei einem Unfall zu erhöhen. Diese beiden Maßnahmen können dann dazu führen, dass die Passagiere den Unfall unbeschadet überstehen können. Die unterschiedlichen Positionen der Sitze können auf unterschiedliche Arten erzielt werden. Denkbar sind hier reine Stecklösungen, bei denen entsprechende Vorrichtungen zum einfachen Einstecken der Sitze an den unterschiedlichen Stellen vorgesehen werden. Dabei kann die Stabilität der Wohnplätze, also die Befestigung in der Ausgangsposition, jeweils auch geringer ausfallen, falls eine entsprechende Belegung vor Fahrtantritt überprüft wird. Die Fahrplätze, also die Befestigung in der Fahrtposition, müssen jedoch den vorgeschriebenen Kräften Stand halten. Es können auch Schwenk-, Roll- oder Schiebelösungen zur Anwendung kommen. Wichtig ist aber die entsprechend sicherere Verankerung der Sitze in der Fahrtposition.

Die Abfrage dieser sicheren Positionen, also die Befestigung der Sitze in den Fahrtpositionen, kann in Verbindung mit einer Prüfung, ob sich ein Mitfahrer auf dem entsprechenden Sitz befindet, Voraussetzung für das Starten des Fahrzeuges und somit für ein Bewegen des Fahrzeuges sein.

In entsprechender Weise ist aber auch eine Ausgestaltung mit zumindest einer Sitzeinrichtung mit zumindest zwei Sitzplätzen möglich, wobei sich entsprechende Vorteile ergeben.

Erfindungsgemäss ist es vorgesehen, dass zumindest ein Aufprallkissensystem vorgesehen ist und dass der Sicherheitsabstand so vorgegeben ist, dass zwischen der Seitenwand und einer auf dem Sitzplatz sitzenden Person zumindest ein Aufprallkissen des Aufprallkissensystems entfaltbar ist. Das Aufprallkissensystem (Airbagsystem) kann hierbei ein oder mehrere Aufprallkissen (Airbags) aufweisen, die im Fall eines Unfalls, insbesondere eines Seitenaufpralls, entfaltet werden, um die auf dem Sitzplatz der Sitzeinrichtung sitzende Person zu schützen. Durch den Sicherheitsabstand wird die Entfaltung das Aufprallkissens ermöglicht. Dies macht die Anordnung eines entsprechend wirksamen Aufprallkissensystems möglich.

Vorteilhaft ist es, dass zumindest ein Energie absorbierendes Element vorgesehen ist, das an dem Laufboden im Bereich der Seitenwand angeordnet ist. Hierdurch wird eine wesentliche Energieaufnahme ermöglicht. Eine Seitenwand eines herkömmlichen Freizeitfahrzeugs ist in der Regel nicht für eine hohe Energieaufnahme ausgelegt, da keine diesbezüglichen gesetzlichen Anforderungen bestanden. Über das Energie absorbierende Element kann gegebenenfalls bereits ein wesentlicher Teil der Aufprallenergie absorbiert und in Längsträger oder dergleichen eines Fahrzeugchassis eingeleitet werden. Dies reduziert die konstruktiven Anforderungen bezüglich der betreffenden Seitenwand. Somit ist es speziell in diesem Zusammenhang ebenfalls vorteilhaft, dass das Energie absorbierende Element mit einem Fahrzeugchassis, insbesondere mit einem Längsträger des Fahrzeugchassis, verbunden ist.

Vorteilhaft ist es, dass sich das Energie absorbierende Element entlang einer Fahrtrichtung betrachtet zumindest über eine Länge des Sitzplatzes der Sitzeinrichtung erstreckt. Hierdurch ist sichergestellt, dass auch bei einem lokal konzentrierten Aufprall, beispielsweise bei einem Pfahlaufprall, ein Schutz für den Passagier gewährleistet ist.

Vorteilhaft ist es, dass zumindest für den Sitzplatz der Sitzeinrichtung, der in der Ausgangsposition an der Seitenwand angeordnet ist, zumindest ein Belegungssensor vorgesehen ist, und dass in einem Fall, in dem sich die Sitzeinrichtung in der Ausgangsposition befindet und der Belegungssensor eine Belegung des Sitzplatzes der Sitzeinrichtung, der in der Ausgangsposition an der Seitenwand angeordnet ist, erfasst, ein Starten eines Antriebs unterbunden ist. Dadurch kann verhindert werden, dass die Sitzeinrichtung aus Bequemlichkeit oder aus Nachlässigkeit nicht umgebaut wird. Zugleich kann aber auch eine Nutzung ermöglicht werden, falls der betreffende Sitzplatz nicht benötigt wird. Hierdurch kann das Freizeitfahrzeug beispielsweise auch für kurze Fahrten zum Einkaufen oder dergleichen genutzt werden, ohne dass für jede Fahrt ein Umbau erforderlich ist.

Vorteilhaft ist es, dass die Sitzeinrichtung relativ zu dem Laufboden aus der Ausgangsposition in die Fahrtposition verstellbar, insbesondere schwenkbar, rollbar oder schiebbar, ist. Somit kann ein besonders einfacher Umbau ermöglicht werden. Gegebenenfalls können hierbei auch größere Sitzeinrichtungen, die mehrere Sitzplätze umfassen, verstellt werden.

Vorteilhaft ist es, dass die Sitzeinrichtung mittels zumindest einer Steckverbindung in der Ausgangsposition mit dem Laufboden verbindbar ist und dass die Sitzeinrichtung mittels zumindest einer weiteren Steckverbindung in der Fahrtposition mit dem Laufboden verbindbar ist. Dadurch kann eine kostengünstige und einfache Herstellung ermöglicht werden.

Vorteilhaft ist es, dass der Sicherheitsabstand so vorgegeben ist, dass der Sitzplatz der Sitzeinrichtung in der Fahrtposition innerhalb einer Sicherheitszone für einen seitlichen Auffahrunfall angeordnet ist. Beispielsweise kann die Sicherheitszone durch gesetzliche Vorschriften reglementiert werden. Dann kann in Bezug auf einen erforderlichen Sicherheitstest, insbesondere Aufpralltest, eine Mindestgröße für den Sicherheitsabstand bestimmt sein.

Vorteilhaft ist es, dass zumindest eine weitere Sitzeinrichtung in einer Ausgangsposition in Fahrtrichtung betrachtet neben der Sitzeinrichtung angeordnet ist, um eine Sitzbank zu bilden, dass die weitere Sitzeinrichtung in einer Fahrtposition anordenbar ist und dass die Sitzeinrichtung von ihrer Ausgangsposition in ihrer Fahrtposition anordenbar ist, wenn die weitere Sitzeinrichtung in ihrer Fahrtposition angeordnet ist. Speziell können die Sitzeinrichtungen hierdurch als Einzelsitze ausgebildet sein. Aber auch die Kombination eines Einzelsitzes mit einer Sitzeinrichtung mit zwei Sitzplätzen kann hierdurch ermöglicht werden.

Somit kann ein Energie absorbierendes Aufprallelement im Aufbaukonzept eines Freizeitfahrzeuges im Wohnbereich, also dem Bereich hinter dem Fahrer und dem Beifahrer, realisiert werden. Eine Integration von Airbags ist ebenso möglich.

Speziell können je nach Ausgestaltung ein oder mehrere der folgenden Vorteile realisiert werden: Eine vorteilhafte Energieaufnahme kann durch eine Aufbaukonzeption für einen seitlichem Crash realisiert werden. Die Aufrechterhaltung der Sicherheitszone nach dem seitlichen Crash kann gewährleistet werden. Die Positionierung der Mitfahrer in dem geschützten Bereich ist durch das Anordnen der Sitzeinrichtung in der Fahrtposition möglich. Die Gewährleistung des gegebenenfalls zukünftig vorgeschriebenen Personenschutzes kann bereits konstruktiv ermöglicht werden. Eine Abfrage der Position aller Mitfahrer und daraus abgeleitet die Freigabe zum Start des Fahrzeuges sind möglich.

Speziell kann die Aufrechterhaltung der Sicherheitszone nach einem seitlichen Aufprall gewährleistet werden, da die betreffende Sitzeinrichtung von der Ausgangsposition in die Fahrtposition angeordnet werden kann.

Außerdem können eine Aufbaukonzeption zur Energieaufnahme bei seitlichem Aufprall beziehungsweise Unfall, die Positionierung der Passagiersitze in der Sicherheitszone, die Integration von Airbags und die Startunterbrechung für das Freizeitfahrzeug realisiert werden.

Somit kann eine Einhaltung der vorgeschriebenen Normtests für einen seitlichen Aufprallunfall erzielt werden. Eine Energieaufnahme des Aufbaus von Reisemobilen im Bereich des Fußbodens und der Seitenwand kann realisiert werden. Eine Integration von Airbags im Fahrgastraum ist möglich. Und unterschiedliche Positionen der Sitze für unterschiedliche Anwendungsfälle sind realisierbar.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug, das als Wohnmobil ausgebildet ist, in einer auszugsweisen, schematischen Darstellungen entsprechend einem Ausführungsbeispiel der Erfindung, wobei Sitzeinrichtungen in Ausgangspositionen dargestellt sind;
- Fig. 2: das in Fig. 1 gezeigte Freizeitfahrzeug entsprechend dem Ausführungsbeispiel, wobei die Sitzeinrichtungen in Fahrtpositionen dargestellt sind und zudem zur Erläuterung der Erfindung ein schematischer Zustand nach einem Aufprallunfall beziehungsweise einem Aufpralltest dargestellt ist;
- Fig. 3: das in Fig. 1 gezeigte Freizeitfahrzeug entsprechend dem Ausführungsbeispiel in einer schematischen Draufsicht, wobei die Sitzeinrichtungen in Ausgangspositionen dargestellt sind;
- Fig. 4: das in Fig. 3 gezeigte Freizeitfahrzeug entsprechend dem Ausführungsbeispiel, wobei eine Sitzeinrichtung mit einem Sitzplatz, der an einer Seitenwand angeordnet ist, in einer Ausgangspostion und eine weitere Sitzeinrichtung in einer Fahrtposition dargestellt ist; und
- Fig. 5: das in Fig. 3 gezeigte Freizeitfahrzeug entsprechend dem Ausführungsbeispiel, wobei die Sitzeinrichtungen in Fahrtpositionen dargestellt sind und entsprechend Fig. 2 zudem zur Erläuterung der Erfindung ein schematischer Zustand nach einem Aufprallunfall beziehungsweise einem Aufpralltest dargestellt ist.

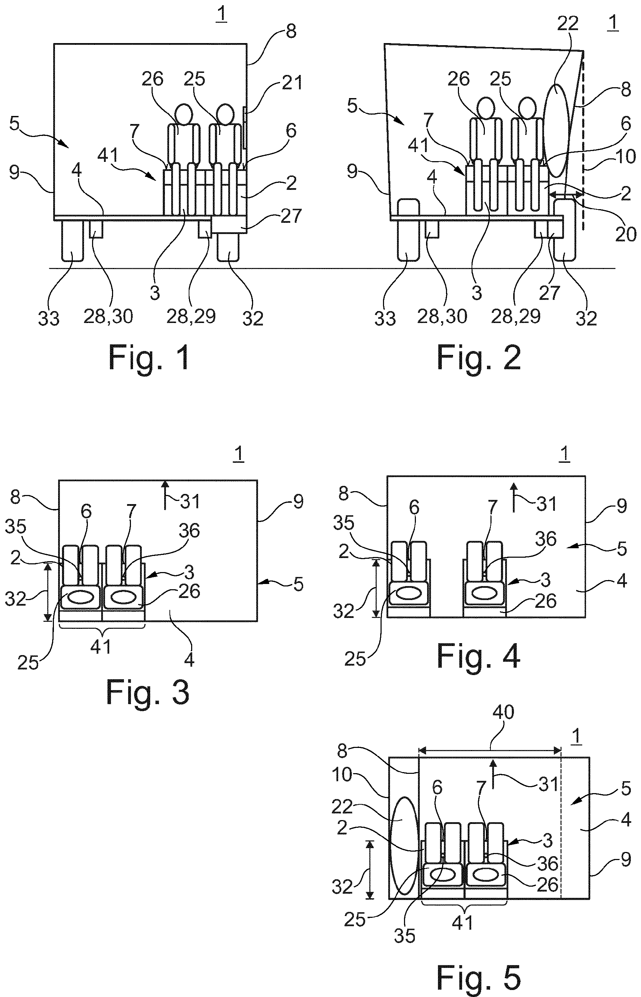

Fig. 1 zeigt ein Freizeitfahrzeug 1 in einer auszugsweisen, schematischen Darstellungen entsprechend einem Ausführungsbeispiel der Erfindung. Das Freizeitfahrzeug 1 ist in diesem Ausführungsbeispiel als Wohnmobil ausgebildet. Das Freizeitfahrzeug 1 kann bei einer abgewandelten Ausgestaltung aber beispielsweise auch als Campervan ausgebildet sein.

Das Freizeitfahrzeug 1 umfasst Sitzeinrichtung 2, 3, die mit einem Laufboden 4 verbundenen sind. Hierbei sind die Sitzeinrichtungen 2, 3 in einem Wohnbereich 5 angeordnet. Der Sitzplatz 6 der Sitzeinrichtung 2 ist in der dargestellten Ausgangsposition an einer Seitenwand 8 angeordnet. Der Sitzplatz 7 der Sitzeinrichtung 3 ist entfernt von der Seitenwand 8 und auch entfernt von einer weiteren Seitenwand 9 angeordnet.

Der Sitzplatz 6 der Sitzeinrichtung 2 aus der Ausgangsposition in eine Fahrtposition verstellbar. Entsprechend ist der Sitzplatz 7 der Sitzeinrichtung 3 aus der Ausgangsposition in eine Fahrtposition verstellbar.

Fig. 2 zeigt das in Fig. 1 gezeigte Freizeitfahrzeug entsprechend dem Ausführungsbeispiel, wobei die Sitzeinrichtungen 2, 3 jeweils aus der in Fig. 1 gezeigten Ausgangsposition in ihre jeweiligen Fahrtpositionen umgestellt sind.

Bei einer möglichen Ausgestaltung sind die Sitzeinrichtungen 2, 3 relativ zu dem Laufboden 4 aus der Ausgangsposition in die Fahrtposition verstellbar, was beispielsweise durch Schwenken, Rollen oder Schieben der Sitzeinrichtungen 2, 3 möglich ist.

Bei einer weiteren möglichen Ausgestaltung sind die Sitzeinrichtungen 2, 3 durch Steckverbindungen einerseits in der Ausgangsposition mit dem Laufboden 4 und andererseits durch weiteren Steckverbindung in der Fahrtposition mit dem Laufboden 4 verbunden.

In Fig. 2 sind die Sitzeinrichtungen 2, 3 und damit die Sitzplätze 6, 7 also in ihren Fahrtpositionen dargestellt. Außerdem ist zur Erläuterung der Erfindung auch ein schematischer Zustand nach einem Aufprallunfall beziehungsweise einem Aufpralltest dargestellt. Eine Position 10 der Seitenwand 8 vor dem Aufprallunfall beziehungsweise Aufpralltest ist durch eine unterbrochen dargestellte Linie 10 veranschaulicht. Zur Vereinfachung der Darstellung ist die Seitenwand 8 in vereinfachter Weise eingedrückt dargestellt, wobei die Seitenwand 8 bauchförmig zu den Sitzeinrichtungen 2, 3 hin eingebogen ist.

Insbesondere der Sitzplatz 6 ist in seiner Fahrtposition mit einem vorgegebenen Sicherheitsabstand 20 von der Seitenwand 8 vor dem Aufprall beabstandet, was in Bezug auf die unterbrochen dargestellte Linie 10 dargestellt ist. Dadurch wird die Seitenwand 8 beim Aufprall nicht in die Person 25 gedrückt.
dass zumindest ein Aufprallkissensystem 21 vorgesehen ist und dass der Sicherheitsabstand 20 so vorgegeben ist, dass zwischen der Seitenwand 8 und einer auf dem Sitzplatz 6 sitzenden Person 25 zumindest ein Aufprallkissen 22 des Aufprallkissensystems 21 entfaltbar ist.

Außerdem ist ein Energie absorbierendes Element 27 vorgesehen, das einen wesentlichen Teil der Aufprallenergie aufnimmt. Das Element 27 ist an dem Laufboden 4 im Bereich der Seitenwand 8 angeordnet. Ferner überträgt das Element 27 auch Energie auf das Fahrzeugchassis 28. Hierfür ist das Element 27 mit einem Längsträger 29 des Fahrzeugchassis 28 verbunden. Das Fahrzeugchassis 28 weist außerdem weitere Bauteile, insbesondere einen weiteren Längsträger 30, auf.

Die Personen 25, 26 können beispielsweise in einer Fahrtrichtung 31 (Fig. 3) orientiert sitzen. Die in Fig. 1 und 2 dargestellten Räder 32, 33 dienen nur zur Veranschaulichung. Insbesondere sind die Räder 32, 33 entlang der Fahrtrichtung 31 an einer geeigneten Stelle und in der Fahrtrichtung 31 betrachtet nicht notwendigerweise im Bereich der Sitzeinrichtungen 2, 3 vorgesehen. Somit kann die Aufprallenergie insbesondere bei einem Pfahlaufprall dann auch nicht von dem Rad 32 beziehungsweise der diesbezüglichen Achse aufgenommen werden.

Fig. 3 zeigt das in Fig. 1 gezeigte Freizeitfahrzeug entsprechend dem Ausführungsbeispiel in einer schematischen Draufsicht, wobei die Sitzeinrichtungen 2, 3 in ihren Ausgangspositionen dargestellt sind. Die Ausgangsposition, die auch in Fig. 1 dargestellt ist, eignet sich für eine Nutzung zum Wohnen beziehungsweise für einen Aufenthalt im Wohnbereich 5, während das Freizeitfahrzeug 1 geparkt ist. Hierbei steht im Wohnbereich dann insbesondere in der Mitte mehr Platz zur Verfügung.

Das Energie absorbierende Element 27 ist so ausgestaltet, dass es sich entlang der Fahrtrichtung 31 betrachtet wenigstens über die Länge 35 der Sitzplätze 6, 7 der Sitzeinrichtungen 2, 3 erstreckt.

In Fig. 3 ist der Sitzplatz 6 der Sitzeinrichtung 2 in der Ausgangsposition an der Seitenwand 8 angeordnet. Ferner befindet sich der Sitzplatz 7 der Sitzeinrichtung 2 direkt neben dem Sitzplatz 6 der Sitzeinrichtung 2.

Fig. 4 zeigt das in Fig. 3 gezeigte Freizeitfahrzeug entsprechend dem Ausführungsbeispiel, wobei die Sitzeinrichtung 2 mit dem Sitzplatz 6 wie in Fig. 3 an der Seitenwand 8 angeordnet ist. Allerdings ist die Sitzeinrichtung 3 bereits verstellt, so dass sich diese in der Fahrtposition befindet. Die Sitzeinrichtung 2 kann nun aus ihrer Ausgangsposition in ihre Fahrtposition verstellt werden.

Fig. 5 zeigt das in Fig. 3 gezeigte Freizeitfahrzeug entsprechend dem Ausführungsbeispiel, wobei die beiden Sitzeinrichtungen 2, 3 in ihren Fahrtpositionen dargestellt sind.

Der in Fig. 3 bis 5 veranschaulichte Umbau ist vor einer Fahrt erforderlich, da eine Person 6 auf dem Sitzplatz 6 sitzt. Hierbei ist ein Belegungssensor 35 vorgesehen, der in den in Fig. 2 und 3 veranschaulichten Situationen, also in einem Fall, in dem sich die Sitzeinrichtung 2 in der Ausgangsposition befindet und eine Person 6 den Sitzplatz 6 der Sitzeinrichtung 2 belegt, diese Belegung erfasst. Da der Belegungssensor 35 die Belegung des Sitzplatzes 6 der Sitzeinrichtung 2 in der Ausgangsposition an der Seitenwand 8 erfasst, ist dann ein Starten des Antriebs des Freizeitfahrzeugs 1 unterbunden. Daher ist eine Fahrt bei belegtem Sitzplatz 6 nur mit den in den Fig. 2 und 5 veranschaulichten Fahrtpositionen der Sitzplätze 6, 7 möglich.

Der Sicherheitsabstand 20 (Fig. 2) ist so vorgegeben, dass der Sitzplatz 6 der Sitzeinrichtung 2 in der Fahrtposition innerhalb einer Sicherheitszone 40 (Fig. 5) für einen seitlichen Auffahrunfall angeordnet ist. Auch der Sitzplatz 7 der Sitzeinrichtung 3 befindet sich innerhalb der Sicherheitszone 40.

Entsprechend Fig. 2 ist auch in Fig. 5 zur Erläuterung der Erfindung ein schematischer Zustand nach einem Aufprallunfall beziehungsweise einem Aufpralltest dargestellt. Hierbei ist veranschaulicht, dass die Seitenwand 8 aus der Position 10 eingedrückt ist.

Da die Sitzeinrichtungen 2, 3 in ihren Ausgangsposition direkt nebeneinander angeordnet sind, ist dann eine Sitzbank 41 gebildeten, was besonders während der Nutzung des Freizeitfahrzeugs zum Wohnen vorteilhaft ist. In diesem Ausführungsbeispiel bilden die Sitzeinrichtungen 2, 3 auch in ihren Fahrtpositionen die Sitzbank 41 aus.

## Patentansprüche

1. Freizeitfahrzeug (1), insbesondere Wohnmobil oder Campervan, mit zumindest einer zumindest mittelbar mit einem Laufboden (4) verbundenen Sitzeinrichtung (2), die in einem Wohnbereich (5) angeordnet ist, und wobei der Sitzplatz (6) der Sitzeinrichtung (2) aus einer Ausgangsposition in eine Fahrtposition verstellbar ist, **dadurch gekennzeichnet,**
**dass** der Sitzplatz (6) der Sitzeinrichtung (2) in einer Ausgangsposition zumindest im Wesentlichen an einer Seitenwand (8) angeordnet ist, dass der Sitzplatz (6) in der Fahrtposition mit einem vorgegebenen Sicherheitsabstand (20) von der Seitenwand (8) beabstandet ist, dass zumindest ein Aufprallkissensystem (21) vorgesehen ist und dass der Sicherheitsabstand (20) so vorgegeben ist, dass zwischen der Seitenwand (8) und einer auf dem Sitzplatz (6) sitzenden Person (25) zumindest ein Aufprallkissen (22) des Aufprallkissensystems (21) entfaltbar ist.

2. Freizeitfahrzeug nach einem der Anspruch 1,
**dadurch gekennzeichnet,**
**dass** zumindest ein Energie absorbierendes Element (27) vorgesehen ist, das an dem Laufboden (4) im Bereich der Seitenwand (8) angeordnet ist.

3. Freizeitfahrzeug nach Anspruch 2,
**dadurch gekennzeichnet,**
**dass** das Energie absorbierende Element (27) mit einem Fahrzeugchassis (28), insbesondere mit einem Längsträger (29) des Fahrzeugchassis (28), verbunden ist.

4. Freizeitfahrzeug nach Anspruch 2 oder 3,
**dadurch gekennzeichnet,**
**dass** sich das Energie absorbierende Element (27) entlang einer Fahrtrichtung (31) betrachtet zumindest über eine Länge (35) des Sitzplatzes (6) der Sitzeinrichtung (2) erstreckt.

5. Freizeitfahrzeug nach einem der Ansprüche 1 bis 4,
**dadurch gekennzeichnet,**
**dass** zumindest für den Sitzplatz (6) der Sitzeinrichtung (2), der in der Ausgangsposition an der Seitenwand (8) angeordnet ist, zumindest ein Belegungssensor (35) vorgesehen ist, und dass in einem Fall, in dem sich die Sitzeinrichtung (2) in der Ausgangsposition befindet und der Belegungssensor (35) eine Belegung des Sitzplatzes (6) der Sitzeinrichtung (2), der in der Ausgangsposition an der Seitenwand (8) angeordnet ist, erfasst, ein Starten eines Antriebs unterbunden ist.

6. Freizeitfahrzeug nach einem der Ansprüche 1 bis 5,
**dadurch gekennzeichnet,**
**dass** die Sitzeinrichtung (2) relativ zu dem Laufboden (4) aus der Ausgangsposition in die Fahrtposition verstellbar, insbesondere schwenkbar, rollbar oder schiebbar, ist.

7. Freizeitfahrzeug nach einem der Ansprüche 1 bis 6,
**dadurch gekennzeichnet,**
**dass** die Sitzeinrichtung (2) mittels zumindest einer Steckverbindung in der Ausgangsposition mit dem Laufboden (4) verbindbar ist und dass die Sitzeinrichtung (2) mittels zumindest einer weiteren Steckverbindung in der Fahrtposition mit dem Laufboden (4) verbindbar ist.

8. Freizeitfahrzeug nach einem der Ansprüche 1 bis 7,
**dadurch gekennzeichnet,**
**dass** der Sicherheitsabstand (20) so vorgegeben ist, dass der Sitzplatz (6) der Sitzeinrichtung (2) in der Fahrtposition innerhalb einer Sicherheitszone (40) für einen seitlichen Auffahrunfall angeordnet ist.

9. Freizeitfahrzeug nach einem der Ansprüche 1 bis 8,
**dadurch gekennzeichnet,**
**dass** zumindest eine weitere Sitzeinrichtung (3) in einer Ausgangsposition in Fahrtrichtung betrachtet neben der Sitzeinrichtung (2) angeordnet ist, um eine Sitzbank (41) zu bilden, dass die weitere Sitzeinrichtung (3) in einer Fahrtposition anordenbar ist und dass die Sitzeinrichtung (2) von ihrer Ausgangsposition in ihrer Fahrtposition anordenbar ist, wenn die weitere Sitzeinrichtung (3) in ihrer Fahrtposition angeordnet ist.

## Claims

1. Recreational vehicle (1), in particular a motorhome or campervan, having at least one seating arrangement (2) which is connected at least indirectly to a floor (4) and is disposed in a living area (5), and wherein the seat (6) of the seating arrangement (2) can be adjusted from a starting position to a traveling position,
**characterized in that**
in a starting position, the seat (6) of the seating arrangement (2) is disposed at least substantially at a side wall (8), **in that**, in the traveling position, the seat (6) is disposed at a predetermined safety distance (20) from the side wall (8), and **in that** at least one impact cushion system (21) is provided and that the safety distance (20) is predetermined in such a way that between the side wall (8) and a person (25) sitting on the seat (6), at least one impact cushion (22) of the impact cushion system (21) is deployable.

2. Recreational vehicle according to any of claim 1,
**characterized in that**
at least one energy-absorbing element (27) is provided, which is disposed at the floor (4) in the area of the side wall (8).

3. Recreational vehicle according to claim 2,
**characterized in that**
the energy-absorbing element (27) is connected to a vehicle chassis (28), in particular to a longitudinal beam (29) of the vehicle chassis (28).

4. Recreational vehicle according to claim 2 or 3,
**characterized in that**
the energy-absorbing element (27) extends at least over a length (35) of the seat (6) or the seating arrangement (2) in a direction of travel (31).

5. Recreational vehicle according to any one of the claims 1 to 4,
**characterized in that**
at least one occupancy sensor (35) is provided for at least the seat (6) of the seating arrangement (2), which in the starting position is disposed at the side wall (8), and that, in case that the seating arrangement (2) is in the starting position and the occupancy sensor (35) detects an occupancy of the seat (6) of the seating arrangement (2), which in the starting position is disposed at the side wall (8), starting of a drive is prevented.

6. Recreational vehicle according to any one of the claims 1 to 5,
**characterized in that**
the seating arrangement (2) is adjustable, in particular pivotable, rollable or slidable, relative to the floor (4) from the starting position into the traveling position.

7. Recreational vehicle according to any one of the claims 1 to 6,
**characterized in that**
in the starting position, the seating arrangement (2) is connectable to the floor (4) by means of at least one plug-in connection, and **in that**, in the traveling position, the seating arrangement (2) is connectable to the floor (4) by means of a further plug-in connection.

8. Recreational vehicle according to any one of the claims 1 to 7,
**characterized in that**
the safety distance (20) is predetermined in such a way that the seat (6) of the seating arrangement (2) in the traveling position is disposed within a safety zone (40) for a side-on collision.

9. Recreational vehicle according to any one of the claims 1 to 8,
**characterized in that**
in a starting position, at least one further seating arrangement (3) is disposed next to the seating arrangement (2) as viewed in the direction of travel in order to form a bench seat (41), **in that** the further seating arrangement (3) can be disposed in a traveling position, and **in that** the seating arrangement (2) can be disposed from its starting position to its traveling position when the further seating arrangement (3) is disposed in its traveling position.

## Revendications

1. Véhicule de loisirs (1), en particulier camping-car ou van aménagé, comprenant au moins un moyen d'assise (2), relié au moins de manière indirecte à un plancher (4), qui est agencé dans une zone d'habitation (5), et dans lequel la place assise (6) du moyen d'assise (2) peut être réglée depuis une position de départ jusque dans une position de conduite,
**caractérisé en ce que**
la place assise (6) du moyen d'assise (2), dans une position de départ, est agencée au moins sensiblement au niveau d'une paroi latérale (8),
la place assise (6), dans la position de conduite, est espacée de la paroi latérale (8) avec une distance de sécurité prédéfinie (20),
il est prévu au moins un système de coussin de collision (21), et
la distance de sécurité (20) est prédéfinie de telle sorte qu'au moins un coussin de collision (22) du système de coussin de collision (21) peut se déployer entre la paroi latérale (8) et une personne (25) assise sur la place assise (6).

2. Véhicule de loisirs selon la revendication 1,
**caractérisé en ce que**
il est prévu au moins un élément d'absorption d'énergie (27) qui est agencé au niveau du plancher (4) dans la zone de la paroi latérale (8).

3. Véhicule de loisirs selon la revendication 2,
**caractérisé en ce que**
l'élément d'absorption d'énergie (27) est relié à un châssis de véhicule (28), en particulier à une poutre transversale (29) du châssis de véhicule (28).

4. Véhicule de loisirs selon la revendication 2 ou 3,
**caractérisé en ce que**
l'élément d'absorption d'énergie (27) s'étend au moins sur une longueur (35) de la place assise (6) du moyen d'assise (2), vu le long d'une direction de conduite (31).

5. Véhicule de loisirs selon l'une quelconque des revendications 1 à 4,
**caractérisé en ce que**
dans la position de départ, au moins pour la place assise (6) du moyen d'assise (2), qui est agencée au niveau de la paroi latérale (8), il est prévu au moins un capteur d'occupation (35), et
dans un cas dans lequel le moyen d'assise (2) se trouve dans la position de départ et dans lequel le capteur d'occupation (35) détecte une occupation de la place assise (6) du moyen d'assise (2), qui est agencée au niveau de la paroi latérale (8) dans la position de départ, un démarrage d'un entraînement est empêché.

6. Véhicule de loisirs selon l'une quelconque des revendications 1 à 5,
**caractérisé en ce que**
le moyen d'assise (2) peut être réglé, en particulier pivoté, roulé, ou coulissé, relativement au plancher (4) depuis la position de départ jusque dans la position de conduite.

7. Véhicule de loisirs selon l'une quelconque des revendications 1 à 6,
**caractérisé en ce que**
le moyen d'assise (2) peut être relié au plancher (4) au moyen d'au moins un raccord supplémentaire dans la position de départ, et
le moyen d'assise (2) peut être relié au plancher (4) au moyen d'au moins un raccord supplémentaire dans la position de conduite.

8. Véhicule de loisirs selon l'une quelconque des revendications 1 à 7,
**caractérisé en ce que**
la distance de sécurité (20) est prédéfinie de telle sorte, dans la position de conduite, la place assise (6) du moyen d'assise (2) est agencée à l'intérieur d'une zone de sécurité (40) pour un accident par collision latérale.

9. Véhicule de loisirs selon l'une quelconque des revendications 1 à 8, **caractérisé en ce que**
dans une position de départ, au moins un moyen d'assise supplémentaire (3) est agencé, vu dans la direction de conduite, à côté du moyen d'assise (2) pour former une banquette d'assise (41),
le moyen d'assise supplémentaire (3) peut être agencé dans une position de conduite, et
le moyen d'assise (2) peut être agencé depuis sa position de départ dans sa position de conduite quand le moyen d'assise supplémentaire (3) est agencé dans sa position de conduite.
